(19) Europäisches Patentamt
European Patent Office
Office européen des brevets

(11) **EP 1 890 921 B1**

(12) **EUROPÄISCHE PATENTSCHRIFT**

(45) Veröffentlichungstag und Bekanntmachung des Hinweises auf die Patenterteilung:
**25.02.2009 Patentblatt 2009/09**

(21) Anmeldenummer: **06761991.6**

(22) Anmeldetag: **08.06.2006**

(51) Int Cl.:
***B60T 8/48*** *(2006.01)*     ***B60T 8/36*** *(2006.01)*

(86) Internationale Anmeldenummer:
**PCT/EP2006/005493**

(87) Internationale Veröffentlichungsnummer:
**WO 2006/131368 (14.12.2006 Gazette 2006/50)**

(54) **HYDRAULISCHE BREMSANLAGE FÜR EIN LANDFAHRZEUG MIT DRUCKSTEUERUNG**

PRESSURE-CONTROLLED HYDRAULIC BRAKE SYSTEM FOR A LAND CRAFT

SYSTEME DE FREINAGE HYDRAULIQUE POUR VEHICULE TERRESTRE AVEC COMMANDE DE PRESSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026740**

(43) Veröffentlichungstag der Anmeldung:
**27.02.2008 Patentblatt 2008/09**

(73) Patentinhaber: **Lucas Automotive GmbH**
**56070 Koblenz (DE)**

(72) Erfinder:
• **HELLER, Frank**
**56154 Boppard (DE)**
• **KNECHTGES, Josef**
**56727 Mayen (DE)**
• **SOPP, Thorsten**
**56072 Koblenz (DE)**

(74) Vertreter: **Schmidt, Steffen**
**Wuesthoff & Wuesthoff**
**Patentanwälte**
**Schweigerstrasse 2**
**81541 München (DE)**

(56) Entgegenhaltungen:
| | |
|---|---|
| **EP-A1- 0 928 730** | **WO-A-93/22169** |
| **WO-A-94/27848** | **WO-A-95/19282** |
| **WO-A-96/10507** | **DE-A1- 3 624 344** |
| **DE-A1- 4 002 865** | **DE-A1- 19 525 800** |
| **JP-A- 2004 284 476** | **US-A- 3 832 010** |
| **US-A- 5 636 908** | |

**Beschreibung**

**Gebiet der Erfindung**

Die vorliegende Erfindung betrifft in Allgemeinen hydraulische Bremsanlagen für Landfahrzeuge und insbesondere eine Bremsanlage und ein Bremsanlagensteuerverfahren zur Drucksteuerung bei automatischen Bremsvorgängen.

**Hintergrund der Erfindung**

Hydraulische Bremsanlagen für Landfahrzeuge können dazu eingerichtet sein, neben vom Fahrer gesteuerten Bremsvorgängen, automatische Bremsvorgänge durchzuführen, die unabhängig von einer Betätigung der Bremsanlage durch den Fahrer erfolgen. Beispiele für solche automatische Bremsvorgänge umfassen Bremsvorgänge zur Antriebsschlupfregelung (ASR), die ein Durchdrehen einzelner Räder beim Anfahrvorgang durch gezieltes Abbremsen der entsprechenden Räder verhindern, zur Fahrdynamikregelung, bei der Fahrzeugverhalten in Grenzbereichen durch gezieltes Abbremsen einzelner Räder gesteuert wird, und zur adaptiven Geschwindigkeitsregelung, bei der beispielsweise durch automatisches Abbremsen des Fahrzeugs vorgegebene Geschwindigkeiten und/oder Abstände zu vorausfahrenden Fahrzeugen eingehalten werden.

Automatische Bremsvorgänge sollen so erfolgen, dass sie vom Fahrer nicht wahrgenommen werden und/oder keine unerwünschten Fahrzeugbewegungen (beispielsweise Rucken und/oder Schiefziehen des Fahrzeugs) verursachen. Diese Ziele sind aus mehreren Gründen schwierig zu erreichen.

Automatische Bremsvorgänge laufen üblicherweise bei geringen Bremsdrücken ab. Dabei kommen Störeinflüsse, wie zum Beispiel ungleiche Luftspiele zwischen Bremskolben und Bremsbelägen, ungleich abgenutzte Bremsbeläge, verschobene Bremskolben bzw. Bremsbeläge etc., besonders zum Tragen. Derartige Störeinflüsse werden beim Betrieb von hydraulischen Bremsanlagen mit zwei Bremskreisen bei vom Fahrer gesteuerten Bremsvorgängen dadurch kompensiert, dass ein Druckausgleich zwischen den zwei Bremskreisen möglich ist. Diese Kompensation steht bei automatischen Bremsvorgängen nicht zur Verfügung, weil dabei die beiden Bremskreise voneinander hydraulisch getrennt sind. Vielmehr ist es bei automatischen Bremsvorgängen sowohl bei Bremsanlagen mit einem Bremskreis als auch bei Bremsanlagen mit zwei oder mehr Bremskreisen erforderlich, Störeinflüsse für jeden Bremskreis separat zu kompensieren.

Um automatische Bremsvorgänge komfortabel ablaufen zu lassen, beispielsweise ohne ruckartige Bewegungen und/oder Schiefzeihen des Fahrzeugs, ist es erwünscht, die in Bremskreisen vorhandenen, Bremswirkung erzeugende Bremsdrücke möglichst genau einzustellen.

In der WO 94/27848 A ist eine Bremsanlage für Kraftfahrzeuge beschrieben. Ein erster Druckgeber besteht aus einem Bremskraftverstärker und einem nachgeschalteten Tandemhauptzylinder. Zweite und dritte Druckgeber werden durch Motor-Pumpen-Aggregate gebildet. Der Hauptbremszylinder ist mit zwei Radbremszylindern über zwei Trennventile verbunden. Die Radbremszylinder sind mit einem Einlassventil und einem Auslassventil versehen. Bei jedem Trennventil ist parallel dazu ein Rückschlagventil vorgesehen, das es ermöglicht, dass der Druck der Radbremszylinder den von den zweiten/dritten Bremsdruckwandiern erzeugten Druck übersteigt. In einem bestimmten Betriebszustand zirkuliert das Bremsmedium durch die geöffneten Trennventile. Durch ein Reduzieren des Volumenflusses beispielsweise mittel einer Pulsweitenmodulation der Trennventile wird oberhalb der Ventile eine Druckdifferenz erzeugt Diese Druckdifferenz addiert sich zu dem Druck des Hauptbremszylinders und erzeugt so einen höheren Radbremsdruck.

Die Druckschrift EP 0928 730 A1 offenbart ein Bremssystem mit einem Hauptzylinder zur Erzeugung eines Fluiddrucks auf der Basis einer Bremsaktivität eines Fahrers, einem Bremszylinder, der über eine erste Leitung mit dem Hauptzylinder verbunden ist und durch den über die erste Leitung vermittelten Fluiddruck aktiviert wird und einem Druckverstärkungsgerät zum Erzeugen des Fluiddrucks in dem Bremszylinder, der höher ist als der Fluiddruck in dem Hauptzylinder. Ein Drucksteuerungsventil ist in der ersten Verbindung zwischen dem Hauptzylinder und dem Bremszylinder angeordnet. Das Drucksteuerungsventil ist mit einer Umgehungsleitung versehen, in der ein Rückschlagventil angeordnet ist.

Die Druckschrift DE 36 24 344 A1 offenbart eine Bremsanlage mit Schlupfregelung für Kraftfahrzeuge. Das Bremssystem besitzt einen Hauptzylinders zum Bereitstellen eines Hydraulikdrucks an Radbremsen. Jedem Rad ist ein Einlass- und ein Auslassventil zugeordnet. Die Bremsanlage mit einem Hilfsdruck-Versorgungssystem ausgerüstet, um einen Hilfsdruck bereitzustellen, der in einem Antriebsschlupfregelfall aktiviert wird. ASR-Ventile unterbrechen dann die Verbindung zwischen Hauptzylinder und Radbremsen. Die ASR-Ventile können zeitweise oder gepulst angesteuert werden.

Die Druckschrift WO 97/19282 offenbart ein Bremssystem für ein Traktionssteuerungssystem, das einen Druck innerhalb des Bremssystems auf einem gewünschtem Niveau hält, indem ein Trennventil, das mit einer Bremsleitung gekoppelt ist, angesteuert wird. Das Trennventil wird dadurch gesteuert, daß es bei einem vorausgewählten Niveau so mit Strom versorgt wird, daß der durch das Ventil ausgeübte Haltedruck während des Traktionssteuerungsvorgangs aufrecht erhalten wird.

Die Druckschrift WO 96/10507 betrifft eine hydraulische Bremsanlage, die zur Bremsschlupfregelung, zur Antriebsschlupfregelung und zur weiteren Fahrstabilitätsregelung eingesetzt wird, bei der der Förderdruck einer Pumpe elektronisch geregelt wird. Zur Regelung wird beispielsweise die Regelung bzw. Reduzierung des Motorenstroms der Pumpe, eine elektromagnetische Schließung des Saugventils der Pumpe oder aber ein kurzzeitiges Umschalten des Trennventils in der Bremsleitung beschrieben.

Die Druckschrift DE 40 02 865 A1 beschreibt eine anfahr- und bremsschlupfgeregelte hydraulische Bremsanlage, die mit zwischen dem Hauptzylinder und den Bremsen der motorseitig angetriebenen Räder vorgeschalteten Trennventilen, mit jeder Radbremse zugeordneten elektromagnetischen Einlaßventilen und Auslaßventilen sowie weiteren Hilfsdruckpumpen ausgerüstet ist. Die Hilfsdruckpumpen saugen aus einem Vorratsbehälter Druckmittel an und fördern dieses über Hilfsdruckleitungen in den Hauptzylinder. Ferner sind Sensoren zum Erfassen der Winkelgeschwindigkeit des jeweils abzubremsenden Rades und eine elektronische Auswerteeinheit vorgesehen, wobei das jeweils zwischen dem Hauptzylinder und der anfahrschlupfgeregelten Radbremse angeordnete Trennventil als Druckbegrenzerventil schaltbar ist, dessen Haltedruckniveau sowie die Größe des Haltedruck-Spannungsgradienten variabel einstellbar ist.

Die Druckschrift WO 93/22169 betrifft eine Schaltungsanordnung für eine geregelte hydraulische Bremsanlage, die derart ausgebildet ist, daß im Antriebsschlupfregelungsmodus über Auslaßventile an den Radbremsen der geregelten Räder und/oder über Trennventile, die im Druckmittelweg von der Hydraulikpumpe zu dem Hauptzylinder liegen, der von der Hydraulikpumpe erzeugte Druck begrenzt und abgebaut wird. Die Einlaßventile an den Radbremsen der angetriebenen Räder sind während des Antriebsschlupfregelmodus ständig auf Durchlaß geschaltet. Die Hydraulikpumpe wird vorzugsweise während des gesamten Antriebsschlupfregelmodus mit voller Leistung betrieben.

Die Druckschrift DE 195 25 800 A1 betrifft ein Antriebsschlupfregelsystem, bei welchem die den Druckaufbau erzeugende Pumpe während des gesamten Antriebsschlupfregelbetriebs angesteuert wird und ein Steuermittel die Verbindung zwischen Pumpeneingang und Vorratsbehälter nur dann öffnet, wenn der Druck aufgebaut werden soll.

Die Druckschrift US 3,832,010 betrifft eine Einrichtung zur Steuerung der Abbremsung eines Rades bei einem Fahrzeug. Diese umfaßt ein elektrisch betriebenes Ventil, das in dem Bremskreis des Rades integriert ist. Das Ventil wird durch einen gepulsten Strom gesteuert, der eine Frequenz in Abhängigkeit von dem Schlupfgrad des Rades besitzt. Das Ventil dient dazu, den Druck des in dem Bremskreis befindlichen Fluids während eines derartigen Radschlupfes zu begrenzen.

Die Druckschrift 5,636,908 betrifft ein Flüssigkeitsdruck-Regelungsventil, das mit einem Ventilgehäuse versehen ist, in welchem ein Ventilschieber verschiebbar angeordnet ist. Der Ventilschieber wird von einem Eingangsflüssigkeitsdruck angesprochen, um einen Flüssigkeitsdruck in Abhängigkeit von einer Axialstellung des Ventilschiebers zu regeln.

Die Druckschrift JP 2004284476 A betrifft ein Fahrzeugbremssystem zum Verringern von Bremsgeräuschen. Ein Hauptzylinderdruck, der in einem Hauptzylinder erzeugt wird, wird an einen Radzylinder über ein Linearventil, das einen Differentialdruck proportional zur zugeführten Strommenge erzeugt, und entsprechende Anstiegssteuerventile übertragen. Infolgedessen wird eine Bremskraft erzeugt. Bremsfluid, das aufgrund der Druckbeaufschlagung von Radzylindern ausgestoßen wird, wird in einem Druckregulierdruckspeicher gespeichert. Das Bremsfluid, das aus dem Druckregulierdruckspeicher gepumpt wird, wird durch eine Hydraulikpumpe an die stromabwärtige Seite des Linearventils ausgestoßen, wo der Druck des Fluids eingestellt wird und dann wird das Fluid wieder zum Druckregulierdruckspeicher zurückgeführt.

**Aufgabe der Erfindung**

Aufgabe der Erfindung ist es, bei hydraulischen Bremsanlagen während automatischer Bremsvorgänge den Bremsdruck in einzelnen Bremskreisen genauer einzustellen.

**Kurzbeschreibung der Erfindung**

Zur Lösung der obigen Aufgabe stellt die vorliegende Erfindung eine Bremsanlage und ein Verfahren gemäß den unabhängigen Ansprüchen bereit.

Der Hauptzylinder weist eine Ausgangsseite auf und ist zur Erzeugung von Bremsdruck unter Steuerung eines Fahrers, beispielsweise durch Betätigung eines mit dem Hauptzylinder zusammenwirkenden Bremspedals, vorgesehen.

Der erste Bremskreis umfasst eine erste steuerbare Pumpe und eine erste Ventilanordnung.

Die erste steuerbare Pumpe weist eine Eingangsseite auf und ist zur durch die Steuerung gesteuerten Erzeugung von Bremsdruck in dem ersten Bremskreis vorgesehen.

Die erste Ventilanordnung weist eine Eingangsseite, die mit der Ausgangsseite des Hauptzylinders in Fluidverbindung steht, und eine Ausgangsseite auf, die mit der Ausgangsseite der ersten Pumpe in Fluidverbindung steht. Die erste Ventilanordnung kann einen offenen Betriebszustand, in dem die Eingangsseite und die Ausgangsseite der ersten Ventilanordnung in Fluidverbindung stehen, und einen geschlossenen Betrieszustand einnehmen, in dem die Fluidverbindung zwischen der Eingangsseite und der Ausgangsseite der ersten Ventilanordnung unterbrochen oder gesperrt ist.

Die Steuerung ist eingerichtet, während eines automatischen Bremsvorgangs Steuersignale für die erste Ventilanordnung bereitzustellen, um die erste Ventilanord-nung so in ihre offenen und geschlossenen Betriebszustände zu bringen, dass an der Ausgangsseite der ersten Ventilanordnung ein vorbestimmter Druck eingestellt wird.

Vorzugsweise umfasst die erste Ventilanordnung eine Ventilanordnung gemäß DE 44 39 890 A1.

Erfindungsgemäß erlaubt die Steuerung eine Steuerung der ersten Ventilanordnung mittels Pulsweitenmodulation (PWM). Bei Verwendung einer Pulsweitenmodulation kann ein Signalpuls die erste Ventilanordnung in einen ihrer Betriebszustände bringen, während eine Signalpause die erste Ventilanordnung in ihren anderen Betriebszustand bringt. Dabei können die Verhältnisse von Signalpulsen und Zeiträumen ohne Signal, kurz das Puls/Pause-Verhältnis so eingestellt sein, dass der vorbestimmte Druck an der Ausgangsseite der ersten Ventilanordnung eingestellt wird.

Vorzugsweise ist die Steuerung eingerichtet, in Antwort auf den automatischen Bremsvorgang, das heißt zu Beginn einer automatischen Drucksteuerung in dem ersten Bremskreis, Steuersignale bereitzustellen, die die erste Ventilanordnung für eine vorbestimmte erste Zeitdauer in ihren geschlossenen Betriebszustand bringt. Bei Verwendung einer Pulsweitenmodulation kann dies durch einen oder mehrere sogenannte "initial bursts" erreicht werden, die einer Pulsweitenmodulation von 100% entsprechen können.

Ferner ist es vorgesehen, dass die Steuerung während des automatischen Bremsvorgangs eine Folge von Steuersignalen bereitstellt, die die erste Ventilanordnung abwechselnd in ihre offenen und geschlossenen Betriebszustände bringt. Dabei ist es bevorzugt, dass die Steuersignalfolge in Form hochfrequenter Steuersignale bereitgestellt wird. Bei einer Pulsweitenmodulation kann dies beispielsweise durch sogenannte "dither bursts" erfolgen, die hochfrequente Signalpulse umfassen. Dabei kann in vorteilhafter Weise das Puls-/Pause-Verhältnis der Pulsweitenmodulation gemäß vorherbestimmter Signalverläufe eingestellt bzw. variiert werden. Die Signalverläufe können sowohl kontinuierlich sein, als auch sprungförmige Wechsel aufweisen, wobei die einzelnen Signalverläufe in sich beispielsweise linear, sinus-, rechteck-, dreieck- oder sägezahnförmig sein können. So lässt sich mittels eines sinusförmigen Signalverlaufs ein sogenannter "sweep" erreichen, durch den sich das Geräuschniveau während der Druckeinstellung durch die erste Ventilanordnung reduziert wird.

Ferner ist es hier vorgesehen, die eingangs genannten Steuersignale für die erste Ventilanordnung und die Steuersignale der Steuersignalfolge zu überlagern. Dadurch kann eine Hin-und Herbewegung oder eine sogenannte "shuttle"-Bewegung der ersten Ventilanordnung erreicht werden, die beispielsweise Klebe- und/oder Klemmeffekte und/oder Hysteresen vermeiden kann.

Erfindungsgemäß ist die Steuerung ferner eingerichtet, während des automatischen Bremsvorgangs Steuersignale bereitzustellen, die die erste Ventilanordnung in vorbestimmten Zeitabständen für eine zweite vorbestimmte Zeitdauer in ihren geschlossenen Betriebszustand zu bringen. Bei einer Pulsweitenmodulation kann dies durch sogenannte "safety bursts" erfolgen, die Signalpulse bei einer Pulsweitenmodulation von 100% zu den vorbestimmten Zeitabständen für die zweite vorbestimmte Zeitdauer umfassen. Diese Vorgehensweise ermöglicht es, insbesondere bei niedrigen Bremsdrücken in dem ersten Bremskreis bei Durchführung des automatischen Bremsvorgangs Druckabfällen entgegen zu wirken, die beispielswiese durch Pulsationen an der Ausgangsseite der ersten Pumpe verursacht werden können. So wird ein "safety burst" insbesondere dann angewandt, wenn die an der ersten Ventilanordnung anliegende Druckdifferenz einen vorherbestimmten Grenzwert, den sogenannten "pop-off"-Wert, unterschreitet, um ein ungewolltes Öffnen der ersten Ventilanordnung zu verhindern.

Vorzugweise nimmt die erste Ventileinrichtung ihren offenen Betriebszustand ein, wenn eine vorbestimmte obere Druckdifferenz zwischen ihrer Ausgangsseite und ihrer Eingangsseite vorliegt.

Dies kann durch eine entsprochene Auslegung der ersten Ventileinrichtung erreicht werden. Umfasst die erste Ventilanordnung beispielsweise eine Ventilanordnung gemäß DE 44 39 890 A1, kann dies durch eine entsprechende Dimensionierung von Kraft erzeugenden Komponenten in dieser Ventilanordnung erreicht werden.

Ergänzend oder alternativ kann dies erreicht werden, indem die Steuerung entsprechende Steuersignale bereitstellt. Diese Vorgehensweise kann als Begrenzung des Betriebsbereichs der ersten Ventilanordnung dahingehend verstanden werden, dass die erste Ventileinrichtung bis zu der vorbestimmten oberen Druckdifferenz zwischen ihren Ausgangs- und Eingangsseiten wie oben ausgeführt gesteuert werden kann. Beispielsweise kann die vorbestimmte obere Druckdifferenz 130 bar betragen. Bei Verwendung einer von etwa 20% bis 100% variablen Pulsweitenmodulation kann dann eine genaue Drucksteuerung in dem ersten Bremskreis erfolgen, die komfortabel ablaufende automatische Bremsvorgänge zu gewährleisten vermag.

Erfolgt während des automatischen Bremsvorgangs eine Betätigung der Bremsanlage durch den Fahrer derart, dass ein Abbruch bzw. eine Beendigung des automatischen Bremsvorgangs erforderlich ist oder erscheint (beispielsweise wegen einer Notbremsung), kann die Steuerung einerseits Steuersignale für die erste Ventilanordnung bereitstellen, um die erste Ventilanordnung in ihren offenen Betriebszustand zu steuern, und andererseits Steuersignale für die Bremsanlage bereitstellen, um den automatischen Bremsvorgang zu beenden. Indem die erste Ventilanordnung in ihren offenen Betriebszustand gebracht wird, ist es möglich, durch den Fahrer im Hauptzylinder erzeugten Bremsdruck dem ersten Bremskreis zuzuführen.

Erfolgt eine Betätigung der Bremsanlage durch den Fahrer derart, dass der automatische Bremsvorgang nicht beendet werden soll (beispielsweise bei einer kurzen, unbeabsichtigten Betätigung des Bremspedals), ist es möglich, dass die Betätigung durch den Fahrer Bremsdrücke auf der Eingangsseite der ersten Ventilanordnung erzeugt, die den Druck auf der Ausgangseite der ersten Ventilanordnung beeinflussen können. Um dies zu verhindern, kann es vorgesehen sein, dass die Steuerung in solchen Fällen die erste Ventilanordnung so ihre offenen und geschlossenen Betriebszustände bringt, dass eine Betätigung der Bremsanlage durch den Fahrer keine Druckänderung auf der Ausgangsseite der ersten Ventilanordnung zur Folge hat. Vorzugsweise wird die erste Ventilanordnung in einem solchen Fall in ihren geschlossenen Betriebszustand gesteuert und vorzugsweise dort gehalten, bis Auswirkung von Bremsdruck des Fahrers ausgeschlossen werden können.

Vorzugsweise ist die Steuerung ferner dazu eingerichtet, während des automatischen Bremsvorgangs die erste Pumpe so zu steuern, dass sie in Abhängigkeit des aktuellen Drucks auf der Ausgangsseite der ersten Ventilanordnung Hydraulikfluid fördert. Dies kann als die erfindungsgemäße Drucksteuerung verbessernde Feinregulierung betrachtet werden. Die Steuerung der ersten Pumpe kann hierbei beispielsweise durch eine entsprechende Ansteuerung eines zum Betrieb der ersten Pumpe vorgesehenen Motors erfolgen.

Vorzugsweise umfasst die Bremsanlage wenigstens einen Drucksensor, der Drucksignale bereitzustellen vermag, die Aussagen über einen aktuellen Druck angeben, der für die Ausgangsseite der ersten Ventilanordnung relevant ist. Dabei ist es ferner vorgesehen, dass die Steuerung die erste Ventilanordnung in Abhängigkeit der Drucksignale steuert.

Der wenigstens eine Drucksensor kann zur Druckerfassung an der Ausgangsseite der ersten Pumpe und/oder an einer Eingangsseite und/oder in einer Radbremse der Bremsanlage dienen.

Bei einer weiteren bevorzugten Ausführungsform umfasst die Bremsanlage einen Bremskreis mit einer zweiten steuerbaren Pumpe und einer zweiten Ventilanordnung. Die obigen Ausführungen hinsichtlich der ersten Pumpe und ersten Ventilanordnung gelten entsprechend für die zweite Pumpe und die zweite Ventilanordnung.

Es ist bei einer solchen Bremsanlage vorgesehen, dass die Steuerung sowohl die erste Ventilanordnung als auch die zweite Ventilanordnung so zu steuern vermag, dass sie jeweils ihre offenen und geschossenen Betriebszustände in einer Art und Weise einnehmen, dass der vorbestimmte Druck an der Ausgangsseite der ersten Ventilanordnung und an der Ausgangsseite der zweiten Ventilanordnung eingestellt wird.

Dabei ist es möglich, dass der Druck an der Ausgangseite der ersten Ventilanordnung als vorbestimmter Druck für beide Bremskreise oder der Druck an der Ausgangseite der zweiten Ventilanordnung als vorbestimmter Druck für beide Bremskreise definiert wird. Ferner ist es möglich, den vorbestimmten Druck in Abhängigkeit von den jeweiligen Drücken an den Ausgangsseiten der Ventilanordnungen, beispielsweise unter Verwendung von Gewichtungsfaktoren, zu definieren.

Das erfindungsgemäße Verfahren ist zur Steuerung einer hydraulischen Bremsanlage für ein Landfahrzeug vorgesehen, die die eingangs genannten Merkmale aufweist. Bei dem Verfahren wird während eines automatischen Bremsvorgangs die erste Ventilanordnung so gesteuert, dass eine Fluidverbindung zwischen der Eingangsseite und der Ausgangseite der ersten Ventilanordnung so gesteuert hergestellt und gesperrt wird, dass an der Ausgangsseite der ersten Ventilanordnung ein vorbestimmter Druck eingestellt wird.

Das erfindungsgemäße Verfahren ist gekennzeichnet durch die Schritte des

- Einstellens oder Variierens des vorbestimmten Drucks mittels eines Puls-/Pause-Verhältnisses einer Pulsweitenmodulation gemäß vorherbestimmter Signalverläufe, wobei die Signalverläufe kontinuierlich sein, als auch sprungförmige Wechsel aufweisen können, und wobei die einzelnen Signalverläufe beispielsweise linear, sinus-, rechteck-, dreieck- oder sägezahnförmig sein können und des
- Sperrens der Fluidverbindung zwischen der Eingangsseite und der Ausgangsseite der ersten Ventilanordnung in vorbestimmten Zeitabständen für eine vorbestimmte Zeitdauer während des automatischen Bremsvorgangs, wenn eine an der ersten Ventilanordnung anliegende Druckdifferenz einen vorherbestimmten Grenzwert unterschreitet.

Bevorzugte Ausführungsformen des erfindungsgemäßen Verfahrens sind in entsprechenden abhängigen Ansprüchen definiert.

## Kurzbeschreibung der Zeichnungen

In der folgenden Beschreibung bevorzugter Ausführungsformen wird auf die beigefügten Figuren Bezug genommen, von denen zeigen:

Fig. 1    eine schematische Darstellung einer erfindungsgemäßen Bremsanlage in einem Betriebszustand für wenigstens teilweise fahrergesteuerte Bremsvorgänge, und

Fig. 2    eine schematische Darstellung einer erfindungsgemäßen Bremsanlage in einem Betriebszustand für automatische Bremsvorgänge.

## Beschreibung bevorzugten Ausführungsformen

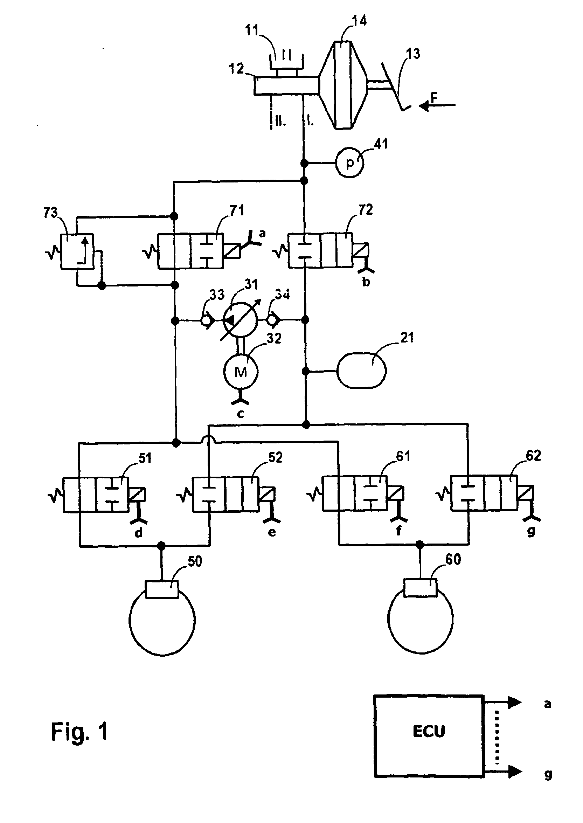

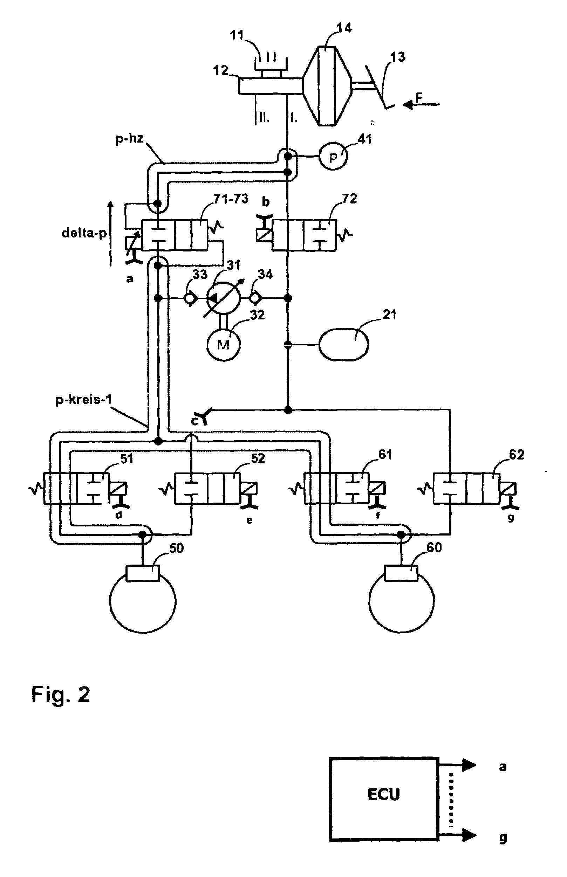

Fig. 1 und 2 zeigen schematische Darstellungen von Bremsanlagen. Die folgenden Ausführungen unter Bezugnahme auf die Ausführungsform von Fig. 1 gelten entsprechend auch für die Ausführungsform von Fig. 2

Die Bremsanlage arbeitet mittels Hydraulikfluid, die zum Teil in einem Behälter 11 bevorratet ist. Zum Erzeugen von Bremsdruck, der durch unter Druck setzen des Hydraulikfluids entsteht, dient ein Hauptzylinder 12, der vom Fahrer durch ein Pedal 13 betätigt werden kann. Wie in den Figuren dargestellt, kann optional ein zwischen dem Hauptzylinder 12 und dem Pedal 13 angeordneter Bremskraftverstärker 14 vorgesehen sein, um eine vom Fahrer eingeleitete Kraft F - vorzugsweise pneumatisch oder hydraulisch - zu verstärken.

Von dem Hauptzylinder 12 ausgehend werden ein erster und zweiter Bremskreis I., II. versorgt, wobei jeder Bremskreis zwei Radbremsen umfasst. Je nachdem, welche Radbremsen des Fahrzeugs von welchem Bremskreis umfasst werden, ergibt sich eine Aufteilung zwischen Vorder- und Hinterachse, wobei ein Bremskreis Radbremsen der Vorderachse und der andere Bremskreis Radbremsen der Hinterachse umfassen kann oder ein Bremskreis die Radbremse eines Vorderrades und die Radbremse des diagonal gegenüberliegenden Hinterrades und der andere Bremskreis die Radbremsen des anderen Vorderrades und des anderen Hinterrades umfassen kann.

Im Folgenden wird davon ausgegangen, dass die Bremskreise I. und II. im Wesentlichen identisch aufgebaut sind. Daher ist nur der Bremskreis I. im Detail gezeigt. Die folgenden Ausführungen unter Bezugnahme auf den Bremskreis I. gelten entsprechend für den Bremskreis II.

Der Bremskreis I. umfasst zwei Radbremsen 50 und 60. Zum Steuern von Bremsdruckverläufen in den Radbremsen 50 und 60 sind eine Ventile 51 und 52 umfassende erste Ventilanordnung und eine Ventile 61 und 62 umfassende zweite Ventilanordnung vorgesehen. Die Ventile 51, 52, 61 und 62 sind hier als durch Elektromagnete betätigbare 2/2-Wegeventile dargestellt.

Der Bremskreis I. umfasst eine Ventile 71, 72 und 73 aufweisende Ventileinrichtung. Die Ventile 71 und 72 sind hier als durch Elektromagnete betätigbare 2/2-Wegeventile dargestellt.

Fig. 1 zeigt die Ventile 51, 61 und 71 jeweils in einem geöffneten Betriebszustand oder Durchflussstellung, während die Ventile 52, 62 und 72 jeweils in einem geschlossenen Betriebszustand oder Sperrstellung gezeigt sind. Diese Betriebszustände oder Stellungen werden im Folgenden auch als Grundstellung bezeichnet.

Bei dem in Fig. 1 dargestellten Betriebszustand des Bremskreises I. besteht aufgrund des geöffneten Betriebszustandes des Ventils 71 eine hydraulische Verbindung zwischen dem Hauptzylinder 12 und den Radbremsen 50 und 60. Dieser Betriebszustand wird für über Betätigungen des Pedals 13 steuerbare Bremsvorgänge, die auch als Normalbremsvorgänge bezeichnet werden können, verwendet. Betätigungen des Hauptzylinders 12 mittels des Pedals 13, optional unter Mitwirkung des Bremskraftverstärkers 14, erzeugen Bremsdrücke in dem Bremskreis I. und damit in den Radbremsen 50 und 60.

Die gezeigte Bremsanlage ist für eine sogenannte Antiblockierregelung ausgelegt, bei der während eines Bremsvorgangs ein Blockieren der Räder verhindert werden soll. Hierfür werden in den Radbremsen 50 und 60 wirkenden Bremsdrücke individuell moduliert. Dies geschieht durch Einstellen in zeitlicher Folge wechselnder Druckaufbau-, Druckhalte- und Druckabbauphasen, die im Folgenden detaillierter erläutert sind.

Die Druckaufbau-, -halte- und -abbauphasen werden durch geeignete Steuerung der den Radbremsen 50 und 60 zugeordneten Ventile 51, 52 bzw. 61, 62 mittels einer elektronischen Steuerung ECU erreicht.

Die elektronische Steuerung ECU kann über eine Reihe von nicht dargestellten Eingängen Betriebszustände eines Fahrzeugs angebende Signale empfangen. Beispielsweise ist es vorgesehen, der elektronischen Steuerung ECU Signale von Raddrehzahlsensoren, Giergeschwindigkeitssensoren, Querbeschleunigungssensoren etc. zuzuführen.

Die elektronische Steuerung ECU weist Ausgänge für Steuersignale a, ... , g zur Steuerung der Ventile 51, 52, 61, 62, 71, und 72 sowie zur Steuerung eines zum Betrieb einer Pumpe 31 vorgesehenen Motors 32 auf.

Bei einem fahrergesteuerten normalen Bremsvorgang mit Antiblockierregelung erfolgt die Steuerung durch die elektronische Steuerung ECU in Abhängigkeit von Betriebszustände des Fahrzeugs angebenden Messgrößen (z. B. Geschwindigkeit, Beschleunigung, Raddrehzahlen, Giergeschwindigkeit, Querbeschleunigung etc.) und Messgrößen, die einen durch den Fahrer gewünschten Bremsvorgang angeben (z. B. Betätigung des Pedals 13, Hydraulikdruck am Ausgang des Hauptzylinders 12 etc.). Der vom Fahrer gewünschte Bremsvorgang kann auch über den im Hauptzylinder 12 erzeugten Bremsdruck P ermittelt werden, für dessen Erfassung ein Sensor 41 vorgesehen ist.

Während eines normalen Bremsvorgangs ohne Antiblockierregelung befinden sich die Ventile 51, 52 und 61, 62 jeweils in ihren Grundstellungen. Stellt die elektronische Steuerung ECU beispielsweise fest, dass den Radbremsen 50 und 60 zugeordnete Rädern zum Blockieren neigen oder blockieren, bewirkt die elektronische Steuerung ECU für die Radbremsen 50 und 60 jeweils eine Druckhaltephase. Führen die Druckhaltephasen nicht dazu, dass die Blokkierneigung bzw. das Blockieren endet, bewirkt die elektronische Steuerung ECU für die Radbremsen 50 und 60 jeweils eine Druckabbauphase so lange bis die Blockierneigung bzw. das Blockieren beendet ist. Danach folgen unter Steuerung der elektronischen Steuerung ECU Druckaufbauphasen für die Radbremsen 50 und 60, in denen die in den Radbremsen 50 und 60 wirkenden Bremsdrücke gemäß dem vom Fahrer gewünschten Bremsvorgang aufgebaut werden.

Während der Druckhaltephasen werden unter Steuerung der elektronischen Steuerung ECU die Ventile 51 und 61 jeweils in eine geschlossene Betriebsposition oder Sperrstellung gebracht. Die Ventile 52 und 62 bleiben dabei in ihren beim normalen Bremsvorgang vorliegenden Grundstellungen.

Das Schließen der Ventile 51 und 61 führt zu einer hydraulischen Abkopplung der Radbremsen 50 und 60, wodurch die in den Radbremsen 50 und 60 wirkenden Bremsdrücke konstant gehalten werden.

Während der Druckabbauphasen werden die Ventile 51 und 61 in ihren geschlossenen Betriebspositionen gehalten und die Ventile 52 und 62 von der elektronischen Steuerung ECU so angesteuert, dass sie jeweils einen geöffneten Betriebszustand oder Durchtlussstellung annehmen. Aufgrund der geöffneten Ventile 52 und 62 kann Hydraulikfluid aus den Radbremsen 50 und 60 abfließen, wodurch die in den Radbremsen 50 und 60 wirkenden Bremsdrücke verringert werden. Dabei abfließendes Hydraulikfluid kann in einem Niederdruckspeicher 21 zwischengespeichert werden.

Während einer Druckaufbauphase nehmen die Ventile 51, 52 und 61 und 62 ihre Grundsstellungen ein, dass heißt die Ventile 51 und 61 werden durch die elektronische Steuerung ECU geöffnet, während die Ventile 52 und 62 geschlossen werden. Zur Erhöhung der in den Druckabbauphasen verringerten Bremsdrücken in den Radbremsen 50 und 60 steuert die elektronische Steuerung ECU den Motor 32 und damit die Pumpe 31 so an, dass über die Ventile 51 und 61 die in den Radbremsen 50 und 60 wirkenden Bremsdrücke auf dem vom Fahrer gewünschten Bremsvorgang entsprechende Niveaus erhöht werden. Dabei fördert die Pumpe 31 in den Druckabbauphasen abgeflossenes Hydraulikfluid, gegebenenfalls aus dem Niederdruckspeicher 21, zurück.

Die z. B. als Radialkolbenpumpe ausgeführte Pumpe 31 ist entgegen ihrer Förderrichtung sperrend, beispielsweise mittels eines Sperrventils 33 am Ausgang der Pumpe 31 und eines Sperrventils 34 am Eingang der Pumpe 31.

Die Drehzahl des Elektromotors 32 ist über das Steuersignal c der elektronischen Steuerung ECU einstellbzw. regelbar, wodurch die Fördermenge der Pumpe 31 gesteuert werden kann. Der Elektromotor 32 kann gleichzeitig eine hier nicht gezeigte Pumpe des zweiten Bremskreises II. betätigen.

Automatische Bremsvorgänge erfolgen in der Regel unabhängig von einer vom Fahrer am Pedal 13 eingeleiteten Kraft F. Solche sind z. B. eine Antriebsschlupfregelung (ASR), die ein Durchdrehen einzelner Räder bei einem Anfahrvorgang durch gezieltes Abbremsen verhindert, eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die durch unter anderem selbsttätiges Bremsen einen Abstand des eigenen Fahrzeugs zu einem vorausfahrenden Fahrzeug einhält.

Für einen automatischen Bremsvorgang werden die Ventile 71 und 72 durch die elektronischen Steuerungen ECU so angesteuert, dass das Ventil 71 einen geschlossenen Betriebszustand oder eine Sperrstellung und das Ventil 72 einen offenen Betriebszustand oder eine Durchflussstellung einnehmen. Die Ventile 51, 52, 61 und 62 bleiben dabei in ihren Grundstellungen. Aufgrund des geschlossenen Ventils 71, der geöffneten Ventile 51 und 61 und der geschlossenen Ventile 52 und 62 sind die Radbremsen 50 und 60 insofern von dem Hauptzylinder 12 bzw. dem Bremskreis II. abgekoppelt, dass keine von außen zugeführten Bremsdrücke, das heißt durch Betätigung des Pedals 13 bewirkte Bremsdrücke, zugeführt werden können. Auch das geöffnete Ventil 72 erlaubt keine Zufuhr von externem Bremsdruck, weil die Ventile 52 und 62 geschlossen sind und die Pumpe 31 ebenfalls wie ein geschlossenes Ventil wirkt. Das geöffnete Ventil 72 ermöglicht es allerdings der Pumpe 31, Hydraulikfluid auch aus dem Behälter 11 anzusaugen, um, wie im Folgenden detailliert beschrieben, Bremsdrücke in den Radbremsen 50 und 60 zu erzeugen.

Um für automatische Bremsvorgänge gewünschte Bremskräfte in den Radbremsen 50 und 60 zu erzeugen, steuert die elektronische Steuerung ECU den Motor 32 bzw. die Pumpe 31 entsprechend. Zum Modulieren oder für eine Feineinstellung der Bremsdrücke in den Radbremsen 50 und 60 kann die elektronische Steuerung ECU die Ventile 51, 52 bzw. 61, 62 vergleichbar zu der oben beschriebenen Antiblockierregelung steuern.

Um Beschädigungen des Bremskreises I. zu vermeiden, kann das Ventil 73 in Form eines Druckbegrenzungsventils vorgesehen sein. Das Ventil 73, das sich normalerweise in einem geschlossenen Betriebszustand befindet, nimmt einen Bremsdruck abbauenden, geöffneten Betriebszustand ein, wenn am Ausgang der Pumpe 31 zu hoher Druck vorliegt.

Automatische Bremsvorgänge finden im Allgemeinen bei geringen Bremsdrücken statt. Dabei können sich Störeinflüsse, die zu unterschiedlichen Bremswirkungen an Rädern führen können, besonders negativ auswirken. Derartige Störeinflüsse werden bei normalen Bremsvorgängen wenigstens teilweise dadurch kompensiert, dass zwischen den Bremskreisen I. und II. eine hydraulische Verbindung besteht, die für einen Druckausgleich im Hauptzylinder 12 nach dem Schwimmkolben-Prinzip sorgt. Dies ist bei automatischen Bremsvorgängen aufgrund des geschlossenen Ventils 71 des Bremskreises I. und eines entsprechenden, ebenfalls geschlossenen Ventils des Bremskreises II. nicht möglich.

Automatische Bremsvorgänge laufen üblicherweise mit niedrigen Bremsdrücken ab, deren Einstellung möglichst genau erfolgen sollte, um automatische Bremsvorgänge komfortabel durchführen zu können. Ein Problem hierbei besteht darin, dass der oder die Bremskräfte einer Bremsanlage bei automatischen Bremsvorgängen vom Hauptzylinder hydraulisch getrennt oder abgekoppelt sind. Dadurch sind hydraulische Ausgleichsvorgänge über den Hauptzylinder und eines damit verbundenen Hydraulikfluidspeichers und, falls vorhanden, einen weiteren Bremskreis, beispielsweise nach dem Schwimmkolben-Prinzip, nicht möglich.

Dieses Problem wird erfindungsgemäß im Allgemeinen dadurch gelöst, dass die Ventile 71 und 73 oder deren Funktionen bereitstellende Ventilanordnungen bei automatischen Bremsvorgängen zur Drucksteuerung verwendet werden.

Fig. 2 zeigt eine erfindungsgemäße Bremsanlage in einem Betriebszustand für einen automatischen Bremsvorgang. Die folgendenden Ausführungen, die auf den Bremskreis I. Bezug nehmen, gelten entsprechend auch für den Bremskreis II. Gemäß Fig. 2 ist das Ventil 72 geöffnet, damit die Pumpe 31 Hydraulikfluid aus dem Hydraulikfluidbehälter 11 ansaugen und damit im Bremskreis I. und insbesondere in den Radbremsen 50 und 60 einen Bremsdruck p-kreis-1 erzeugen kann.

Gemäß Fig. 2 sind das Ventil 71 und das Druckbegrenzungsventil 73 baueinheitlich in einer mit 71-73 bezeichneten Ventilanordnung baueinheitlich integriert. Eine derartige Ventilanordnung ist aus DE 44 39 890 A1 bekannt.

In Fig. 2 ist die Ventilanordnung 71-73 in einem geschlossenen Betriebszustand oder einer Sperrstellung dargestellt. Hier wird davon ausgegangen, dass dieser Betriebszustand durch eine elektrische Ansteuerung von der Steuerung ECU erreicht wird. Demgegenüber wird entsprechend davon ausgegangen, dass ein offener Betriebszustand oder eine Durchlassstellung der Ventilanordnung 71-73 eingenommen wird bzw. vorliegt, wenn die Ventilanordnung 71-73 von der Steuerung ECU nicht elektrisch angesteuert wird; dies kann beispielsweise durch in der Ventilanordnung 71-73 vorgesehene Vorspann- und/oder Rückstellmittel (z.B. Federn) erreicht werden, die die Ventilanordnung 71-73 in ihrem offenen Betriebszustand bringen und dort bis zur nächsten Ansteuerung halten.

Üblicherweise nimmt die Ventilanordnung 71-73 ihren offenen Betriebszustand oder ihre Durchlassstellung ein, wenn zwischen ihrer mit dem Hauptzylinder 12 verbundenen Eingangsseite und ihrer mit der Ausgangsseite der Pumpe 31 verbundenen Ausgangsseite eine vorbestimmte, maximale Druckdifferenz delta-p vorliegt. Wird diese Druckdifferenz erreicht bzw. überschritten, bewirken die die Funktionen des Druckbegrenzungsventils 73 bereitstellenden Komponenten der Ventilanordnung 71-73, dass sich diese selbsttätig öffnet, auch wenn die Steuerung ECU die Ventilanordnung 71-73 elektrisch ansteuern sollte.

Für die Drucksteuerung bei automatischen Bremsvorgängen wird mittels der Steuerung ECU die Durchlasscharakteristik der Ventilanordnung 71-73 gesteuert. Hierfür kann die Steuerung ECU eine Pulsweitenmodulation (PWM), also Signale, mit einstellbarem Verhältnis von Signalpulsdauer und Zeitdauer ohne Signalpuls, verwenden. Durch Einstellung dieses Puls/ Pause-Verhältnisses kann die Durchlasscharakteristik der Ventilanordnung 71-73 bzw. die die Druckbegrenzungsfunktion der Ventilanordnung 71-73 bestimmende Druckdifferenz delta-p als Funktion der Pulsweitenmodulation gesteuert werden. Dies kann durch folgende Gleichung angegeben werden:

$$\text{delta-p} = f(\text{PWM})$$

Dabei gibt die Druckdifferenz delta-p die Differenz des an der Ausgangseite der Pumpe 31 bzw. an der mit dieser verbunden Ausgangseite der Ventilanordnung 71-73 vorliegenden Bremsdrucks p-kreis 1 und des an der Ausgangseite des Hauptzylinders 12 bzw. an der mit dieser verbundenen Eingangsseite der Ventilanordnung 71-73 vorliegenden Drucks p-hz an. Dies kann durch folgende Gleichung angegeben werden:

$$\text{delta-p} = \text{p-kreis-1} - \text{p-hz}$$

Mittels einer vorteilhafterweise kontinuierlichen Steuerung der die Druckbegrenzungsfunktion bzw. Durchlasscharakteristik der Ventilanordnung 71-73 relevanten Druckdifferenz delta-p kann der Bremsdruck p-kreis-1 während eines automatischen Bremsvorgangs ebenfalls vorzugsweise kontinuierlich gesteuert werden. Dies erfolgt durch eine verglichen mit bekannten Ansteuerungen der Ventilanordnung 71-73 bzw. vergleichbaren Ventilanordnungen modifizierten Ansteuerung der Ventilanordnung 71-73 durch die Steuerung ECU. Insbesondere sind folgende Ansteuerungen vorgesehen.

Wird ein automatischer Bremsvorgang eingeleitet, werden, wie oben ausgeführt, die Ventile 51, 61 und 72 in ihre offenen Betriebszustände bzw. Durchlassstellungen und die Ventile 52 und 62 in ihre geschlossenen Betrieszustände bzw. Sperrstellungen gebracht. Vergleichbar zu den Ventilen 71 und 73 von Fig. 1 wird die Ventilanordnung 71-73 so angesteuert, dass die Fluidverbindung zwischen der Ausgangsseite des Hauptzylinders 12 und der Ausgangseite der Pumpe 31 gesperrt ist. Dies kann durch eine kontinuierliche Ansteuerung der Ventilanordnung 71-73 durch die Steuerung ECU, beispielsweise mit einer Pulsweitenmodulation von 100%, erreicht werden. Diese Ansteuerung bewirkt, dass die Ventilanordnung 71-73 definiert ihren geschlossenen Betriebszustand bzw. Sperrstellung einnimmt. Diese Ansteuerung ist für eine Zeitdauer vorgesehen, bis ein Bremsdruck p-kreis-1 erreicht ist, der wenigstens näherungsweise einem für den automatischen Bremsvorgang vorbestimmten Bremsdruck entspricht. Da die hierfür benötigte Zeitdauer gering ist, kann diese Ansteuerung auch als "initial burst" bezeichnet werden.

Nach dieser anfänglichen Ansteuerung der Ventilanordnung 71-73 ist es vorgesehen, die Ansteuerung seitens der Steuerung ECU insbesondere mittels Pulsweitenmodulation so durchzuführen, dass sich die Ventilanordnung 71-73 öffnet, wenn der Bremsdruck p-kreis-1 zu hoch ist, und schließt, wenn zum Erreichen des vorbestimmten Bremsrucks der Bremsdruck p-kreis-1 zu erhöhen ist.

Ferner ist es vorgesehen, die Ventilanordnung 71-73 so anzusteuern, dass die jeweils vorliegende Druckdifferenz delta-p eine Hin-Her- oder "shuttle"-Bewegung von beweglichen Teilen der Ventilanordnung 71-73 derart bewirkt, dass sich die Ventilanordnung 71-73 öffnet und schließt. Dies kann durch eine hochfrequente Ansteuerung der Ventilanordnung 71-73 seitens der Steuerung ECU, beispielsweise durch Hochfrequenz-Signalpulse, erreicht werden, die auch als "dither bursts" bezeichnet werden können. Diese Ansteuerung kann Hysteresen sowie Klebe- bzw. Klemmeffekte verhindern und wird vorteilhafterweise der zuvor genannten Ansteuerung zum Einstellen des Bremsdrucks p-kreis-1 überlagert.

Des Weiteren ist es vorgesehen, dass die Steuerung ECU die Ventilanordnung 71-73 so ansteuert, dass diese vorzugsweise kurzzeitig ihren geschlossenen Betriebszustand bzw. Sperrstellung definiert einnimmt. Dies kann durch eine für einen entsprechenden Zeitraum vorgesehene kontinuierliche Ansteuerung, beispielsweise mittels einer Pulsweitenmodulation von 100%, erfolgen. Diese Ansteuerung kann in vorbestimmten Zeitabständen, insbesondere wenn der Bremsdruck p-kreis-1 auf einen geringen Wert eingestellt werden soll, erfolgen, um beispielsweise einem Druckabfall entgegen zu wirken, der aufgrund von Pulsationen an der Ausgangsseite der Pumpe 31 entstehen kann, was zu einem unerwünschten Öffnen führen kann. Diese Ansteuerung, die auch als "safety burst" bezeichnet werden kann, kann beispielsweise durch eine pulsförmige Ansteuerung mit einer Pulsweitenmodulation von 100% erreicht werden.

Ergänzend ist es zu den zuvor genannten Maßnahmen vorgesehen, den Stellbereich der Ventilanordnung 71-73 zu begrenzen. Beispielsweise kann eine Druckdifferenz delta-p von etwa 130 bar vorbestimmt werden, bei deren Überschreitung sich die Ventilanordnung 71-73 zuverlässig öffnet, um Beschädigungen zu vermeiden, während bei Druckdifferenzen delta-p unterhalb dieser vorbestimmten Grenze eine genaue Steuerung des Bremsdrucks p-kreis-1, beispielsweise mit einer von etwa 20% bis 100% einstellbaren Pulsweitenmodulation, durchgeführt werden kann, um optimierte, komfortabel ablaufende automatische Bremsvorgänge zu gewährleisten.

Bisher ist davon ausgegangen worden, dass während des automatischen Bremsvorgangs keine Betätigung der Bremsanlage durch den Fahrer stattfindet. Um auch beim Betätigen der Bremsanlage durch den Fahrer während des automatischen Bremsvorgangs einen zuverlässigen Betrieb zu gewährleisten, ist Folgendes vorgesehen.

Zunächst wird bei Betätigung der Bremsanlage durch einen Fahrer ermittelt, ob die aktuelle Betätigung einen tatsächlichen Bremswunsch des Fahrers angibt oder nicht. Dies kann beispielsweise aus der Stärke und/oder Geschwindigkeit und/oder Zeitdauer der Betätigung des Bremspedals 13 und/oder an der Ausgangsseite des Hauptzylinders 12 erzeugten Bremsdrücken p-hz ermittelt werden.

Betätigt der Fahrer die Bremsanlage unbeabsichtigt, versehentlich, kurz werden Beeinflussungen des automatischen Bremsvorgangs durch dadurch auf der Ausgangsseite des Hauptzylinders 12 erzeugte Bremsdrücke p-hz vermieden, indem die Ventilanordnung 71-73 so lange ihren geschlossenen Betriebszustand bzw. Sperrstellung einnimmt, solange möglicherweise störende Bremsdrücke p-hz vorliegen.

Betätigt der Fahrer die Bremsanlage derart, dass von einem tatsächlichen Bremswunsch des Fahrers ausgegangen werden kann, wird der automatische Bremsvorgang und damit die Drucksteuerung mittels der Ventilanordnung 71-73 von der Steuerung ECU beendet oder wenigstens unterbrochen.

Die Steuerung des Drucks p-kreis-1 kann zusätzlich zu der Steuerung mittels der Ventilanordnung 71-73 durch eine Steuerung der von der Pumpe 31 geförderten Menge Hydraulikfluid durch entsprechende Ansteuerung des Motors 32 unterstützt werden. Dies kann kontinuierlich oder dann erfolgen, wenn die Drucksteuerung mittels der Ventilanordnung 71-73 zu langsam erfolgt.

Bei Unterstützung der Druckregelung durch die Pumpe 31 ist zu berücksichtigen, dass der Motor 32 bei der hier zugrunde gelegten Bremsanlage auch zum Betrieb einer entsprechenden Pumpe des Bremskreises II. vorgesehen ist. Eine genaue Steuerung des Bremsdrucks p-kreis-1 und eines entsprechenden Bremsdrucks des Bremskreises II. kann daher über die Pumpen alleine nicht erfolgen. In Kombination mit einer Druckregelung mittels der Ventilanordnung 71-73 und einer entsprechenden Ventilanordnung des Bremskreises II. kann auch bei teilweiser Drucksteuerung unter Verwendung der Pumpen der jeweilige Bremsdruck p-kreis-1 in beiden Bremskreisen genau eingestellt werden.

Zur Optimierung der Drucksteuerung ist es ferner vorgesehen, mittels Drucksensoren oder vergleichbaren Komponenten den jeweils aktuell vorherrschenden Druck zu ermitteln, der für die Ausgangsseite der Ventilanordnung 71-73 relevant ist oder dort vorliegt. Dies kann durch einen oder mehrere unmittelbar an der Ausgangsseite der Ventilanordnung 71-73 angeordnete Drucksensoren erfolgen. Ergänzend oder alternativ ist es möglich, einen oder mehrere Drucksensoren an der Ausgangseite der Pumpe 31 und/oder in den Radbremsen 50, 60 anzuordnen.

**Patentansprüche**

1. Hydraulische Bremsanlage für ein Landfahrzeug mit

   - einer Steuerung (ECU), die eingerichtet ist, Steuersignale (a, ..., g) zur Steuerung automatischer Bremsvorgänge der Bremsanlage bereitzustellen,
   - einem Hauptzylinders (12), der eine Ausgangsseite aufweist, zur Erzeugung von Bremsdruck unter Steuerung eines Fahrers, und
   - einem ersten Bremskreis (I.) mit

     -- einer ersten steuerbaren Pumpe (31), die eine Ausgangsseite aufweist, zur durch die Steuerung (ECU) gesteuerten Erzeugung von Bremsdruck in dem ersten Bremskreis (I.), und
     -- einer ersten Ventilanordnung (71, 73) mit einer Eingangsseite, die mit der Ausgangseite des Hauptzylinders (12) in Fluidverbindung steht, und einer Ausgangsseite, die mit der Ausgangsseite der ersten Pumpe (31) in Fluidverbindung steht, wobei die erste Ventilanordnung (71, 73) einen offenen Betriebszustand, in dem die Eingangsseite und die Ausgangsseite der ersten Ventilanordnung (71, 73) in Fluidverbindung stehen, und einen geschlossenen Betriebszustand aufweist, in dem die Fluidverbindung zwischen der Eingangsseite und der Ausgangsseite der ersten Ventilanordnung (71, 73) gesperrt ist, bei der

   - die Steuerung (ECU) eingerichtet ist, während eines automatischen Bremsvorgangs Steuersignale für die erste Ventilanordnung (71, 73) bereitzustellen, um die erste Ventilanordnung (71, 73) so in ihre offenen und geschlossenen Betriebszustände zu steuern, dass an der Ausgangsseite der ersten Ventilanordnung (71, 73) ein vorbestimmter Druck eingestellt wird, **dadurch gekennzeichnet, dass**
   - der vorbestimmte Druck mittels eines Puls-/Pause-Verhältnisses einer Pulsweitenmodulation gemäß vorherbestimmter Signalverläufe eingestellt oder variiert wird, wobei die Signalverläufe kontinuierlich sein, als auch sprungförmige Wechsel aufweisen können, und wobei die einzelnen Signalverläufe beispielsweise linear, sinus-, rechteck-, dreieck- oder sägezahnförmig sein können und wobei
   - die Steuerung (ECU) eingerichtet ist, während des automatischen Bremsvorgangs in vorbestimmten Zeitabständen Steuersignale für die erste Ventilanordnung (71, 73) bereitzustellen, um die erste Ventilanordnung (71, 73) in den vorbestimmten Zeitabständen für eine vorbestimmte Zeitdauer in ihren geschlossenen Betriebszustand zu steuern, wenn eine an der ersten Ventilanordnung (71,73) anliegende Druckdifferenz einen vorherbestimmten Grenzwert unterschreitet.

2. Bremsanlage nach Anspruch 1, bei der
   die Steuerung (ECU) eingerichtet ist, in Antwort auf den automatischen Bremsvorgang Steuersignale für die erste Ventilanordnung (71, 73) bereitzustellen, um die erste Ventilanordnung (71, 73) für eine weitere vorbestimmte Zeitdauer in ihren geschlossenen Betriebszustand zu steuern.

3. Bremsanlage nach Anspruch 1, bei der
   die Steuerung (ECU) eingerichtet ist, während des automatischen Bremsvorgangs eine Folge von Steuersignalen für die erste Ventilanordnung (71, 73) bereitzustellen,
   um die erste Ventilanordnung (71, 73) abwechselnd ihre offenen und geschlossenen Betriebszustände zu steuern.

4. Bremsanlage nach Anspruch 3, bei der
   die Steuerung (ECU) die Steuersignalfolge in Form hochfrequenter Steuersignalen bereitstellt.

5. Bremsanlage nach Anspruch 3 oder 4, bei der
   die Steuerung (ECU) eingerichtet ist, Steuersignale bereitzustellen, die die Steuersignale gemäß Anspruch 1 und die Folge von wechselnden Steuersignalen gemäß Anspruch 3 oder 4 sich einander überlagernd umfassen.

**6.** Bremsanlage nach einem der vorherigen Ansprüche, bei der
die erste Ventileinrichtung (71, 73) bei einer vorbestimmten oberen Druckdifferenz zwischen ihrer Ausgangseite und ihrer Eingangsseite ihren offenen Betriebszustand einnimmt.

**7.** Bremsanlage nach Anspruch 6, bei der
die Steuerung (ECU) eingerichtet ist, Steuersignale für die erste Ventilanordnung (71, 73) bereitzustellen, um die erste Ventilanordnung (71, 73) bei der vorbestimmten oberen Druckdifferenz in ihren offenen Betriebszustand zu steuern.

**8.** Bremsanlage nach Anspruch 6 oder 7, bei der
die erste Ventileinrichtung (71, 73) bei der vorbestimmten oberen Druckdifferenz ihren offenen Betriebszustand automatisch einnimmt.

**9.** Bremsanlage nach einem der vorherigen Ansprüche, bei der
die Steuerung (ECU) eingerichtet ist, in Antwort auf eine Betätigung der Bremsanlage durch einen Fahrer, die einen tatsächlichen Bremswunsch des Fahrers angibt, Steuersignale für die erste Ventilanordnung (71, 73) bereitzustellen, um die erste Ventilanordnung (71, 73) in ihren offenen Betriebszustand zu steuern, und Steuersignale für die Bremsanlage bereitzustellen, um den automatischen Bremsvorgang zu beenden.

**10.** Bremsanlage nach einem der vorherigen Ansprüche, bei der
die Steuerung (ECU) eingerichtet ist, in Antwort auf eine Betätigung der Bremsanlage durch einen Fahrer, die keinen tatsächlichen Bremswunsch des Fahrers angibt, Steuersignale für die erste Ventilanordnung (71, 73) bereitzustellen, um die erste Ventilanordnung (71, 73) so in ihre offenen und geschlossenen Betriebszustände zu steuern, dass eine Druckänderung an der Ausgangsseite der ersten Ventilanordnung (71, 73) aufgrund von durch die Betätigung der Bremsanlage durch den Fahrer erzeugten Bremsdrücken verhindert wird.

**11.** Bremsanlage nach einem der vorherigen Ansprüche, bei der
die Steuerung (ECU) eingerichtet ist, während des automatischen Bremsvorgangs Steuersignale für die erste Pumpe (31) bereitzustellen, um die erste Pumpe (13) in Abhängigkeit eines aktuellen Drucks auf der Ausgangsseite der ersten Ventilanordnung (71, 73) zu betreiben.

**12.** Bremsanlage nach einem der vorherigen Ansprüche,

- mit wenigstens einem Drucksensor, der einen aktuellen Druck an der Ausgangsseite der ersten Ventilanordnung (71, 73) angebende Drucksignale bereitzustellen vermag, und
- bei der die Steuerung (ECU) eingerichtet ist, während des automatischen Bremsvorgangs Steuersignale für die erste Ventilanordnung (71, 73) bereitzustellen, um die erste Ventilanordnung (71, 73) in Abhängigkeit der Drucksignale in ihre offenen und geschlossenen Betriebszustände zu steuern.

**13.** Bremsanlage nach Anspruch 12, bei der
der wenigstens eine Drucksensor zur Druckerfassung an der Ausgangsseite der ersten Pumpe (31) eingerichtet ist.

**14.** Bremsanlage nach Anspruch 12 oder 13, bei der
der wenigstens eine Drucksensor zu Druckerfassung an einer Eingangsseite oder in einer Radbremse (50, 60) der Bremsanlage eingerichtet ist.

**15.** Bremsanlage nach einem der vorherigen Ansprüche, mit

- einem zweiten Bremskreis (II.) mit

-- einer zweiten steuerbaren Pumpe (31), die eine Ausgangsseite aufweist, zur durch die Steuerung (ECU) gesteuerten Erzeugung von Bremsdruck in dem zweiten Bremskreis (II.), und
-- einer zweiten Ventilanordnung (71, 73) mit einer Eingangsseite, die mit der Ausgangseite des Hauptzylinders (12) in Fluidverbindung steht, und einer Ausgangseite, die mit der Ausgangseite der zweiten Pumpe (31) in Fluidverbindung steht, wobei die zweite Ventilanordnung (71, 73) einen offenen Betriebszustand, in dem die Eingangsseite und die Ausgangsseite der zweiten Ventilanordnung (71, 73) in Fluidverbindung stehen, und einen geschlossenen Betriebszustand aufweist, in dem die Fluidverbindung zwischen der Eingangsseite und der Ausgangsseite der zweiten Ventilanordnung (71, 73) gesperrt ist, bei der

- die Steuerung (ECU) eingerichtet ist, während des automatischen Bremsvorgangs Steuersignale für die erste Ventilanordnung (71, 73) und die zweite Ventilanordnung (71, 73) bereitzustellen, um die erste Ventilanordnung (71, 73) und die zweite Ventilanordnung (71, 73) jeweils so in ihre offenen und geschlossenen Betriebszustände zu steuern, dass der vorbestimmte Druck an der Ausgangsseite der ersten Ventilanordnung (71, 73) und an der Ausgangsseite der zweiten Ventilanordnung (71, 73) eingestellt wird.

16. Verfahren zur Steuerung einer hydraulischen Bremsanlage für ein Landfahrzeug, die einen Hauptzylinder (12), der eine Ausgangsseite aufweist, zur Erzeugung von Bremsdruck unter Steuerung eines Fahrers, einen ersten Bremskreis (I.) mit einer ersten steuerbaren Pumpe (31), die eine Ausgangsseite aufweist, zur durch die Steuerung (ECU) gesteuerten Erzeugung von Bremsdruck in dem ersten Bremskreis (I.), und eine erste Ventilanordnung (71, 73) mit einer Eingangsseite, die mit der Ausgangseite des Hauptzylinders (12) in Fluidverbindung steht, und einer Ausgangseite, die mit der Ausgangseite der ersten Pumpe (31) in Fluidverbindung steht, umfasst, wobei eine Fluidverbindung zwischen der Eingangsseite und der Ausgangsseite der ersten Ventilanordnung (71, 73) gesteuert hergestellt und gesperrt werden kann, mit folgenden Schritten:

   - Steuern der ersten Ventilanordnung (71, 73) während eines automatischen Bremsvorgangs, um die Fluidverbindung zwischen der Eingangsseite und der Ausgangsseite der ersten Ventilanordnung (71, 73) derart herzustellen und zu sperren, dass an der Ausgangsseite der ersten Ventilanordnung (71, 73) ein vorbestimmter Druck eingestellt wird, **gekennzeichnet durch** die Schritte des
   - Einstellens oder Variierens des vorbestimmten Drucks mittels eines Puls-/Pause-Verhältnisses einer Pulsweitenmodulation gemäß vorherbestimmter Signalverläufe, wobei die Signalverläufe kontinuierlich sein, als auch sprungförmige Wechsel aufweisen können, und wobei die einzelnen Signalverläufe beispielsweise linear, sinus-, rechteck-, dreieck- oder sägezahnförmig sein können und des
   - Sperrens der Fluidverbindung zwischen der Eingangsseite und der Ausgangsseite der ersten Ventilanordnung (71, 73) in vorbestimmten Zeitabständen für eine vorbestimmte Zeitdauer während des automatischen Bremsvorgangs, wenn eine an der ersten Ventilanordnung (71,73) anliegende Druckdifferenz einen vorherbestimmten Grenzwert unterschreitet.

17. Verfahren nach Anspruch 16, bei dem in Antwort auf den automatischen Bremsvorgang die Fluidverbindung zwischen der Eingangsseite und der Ausgangsseite der ersten Ventilanordnung (71, 73) für eine weitere vorbestimmte Zeitdauer gesperrt wird.

18. Verfahren nach Anspruch 16 oder 17, bei dem während des automatischen Bremsvorgangs die Fluidverbindung zwischen der Eingangsseite und der Ausgangsseite der ersten Ventilanordnung (71, 73) abwechselnd hergestellt und gesperrt wird.

19. Verfahren nach Anspruch 20, bei dem die Fluidverbindung zwischen der Eingangsseite und der Ausgangsseite der ersten Ventilanordnung (71, 73) mit hoher Frequenz abwechselnd hergestellt und gesperrt wird.

20. Verfahren nach einem der Ansprüche 16 bis 19, bei dem die Fluidverbindung zwischen der Eingangsseite und der Ausgangsseite der ersten Ventilanordnung (71, 73) bei einer vorbestimmten oberen Druckdifferenz zwischen der Ausgangseite und der Eingangsseite der ersten Ventileinrichtung (71, 73) hergestellt wird.

21. Verfahren nach einem der Ansprüche 16 bis 20 bei dem in Antwort auf eine Betätigung der Bremsanlage durch einen Fahrer, die einen tatsächlichen Bremswunsch des Fahrers angibt, die Fluidverbindung zwischen der Eingangsseite und der Ausgangsseite der ersten Ventilanordnung (71, 73) hergestellt und der automatische Bremsvorgang beendet werden.

22. Verfahren nach einem der Ansprüche 16 bis 21, bei dem in Antwort auf eine Betätigung der Bremsanlage durch einen Fahrer, die keinen tatsächlichen Bremswunsch des Fahrer angibt, die Fluidverbindung zwischen der Eingangsseite und der Ausgangsseite der ersten Ventilanordnung (71, 73) derart hergestellt und gesperrt wird, dass eine Druckänderung an der Ausgangsseite der ersten Ventilanordnung (71, 73) aufgrund von durch die Betätigung der Bremsanlage durch den Fahrer erzeugten Bremsdrücken verhindert wird.

**23.** Verfahren nach einem der Ansprüche 16 bis 22, bei dem

- wenigstens ein aktueller Druck für die Ausgangsseite der ersten Ventilanordnung (71, 73) ermittelt wird, und
- die Fluidverbindung zwischen der Eingangsseite und der Ausgangsseite der ersten Ventilanordnung (71, 73) in Abhängigkeit des wenigstens einen aktuellen Drucks hergestellt und gesperrt wird.

**24.** Verfahren nach Anspruch 23, bei dem
der wenigstens eine aktuelle Druck an der Ausgangsseite der ersten Pumpe (31) ermittelt wird.

**25.** Verfahren nach Anspruch 24, bei dem
der wenigstens eine aktuelle Druck an einer Eingangsseite oder in einer Radbremse (50, 60) der Bremsanlage ermittelt wird.

**26.** Verfahren nach einem der Ansprüche 16 bis 25, wobei die Bremsanlage einen zweiten Bremskreis (II.) mit einer zweiten steuerbaren Pumpe (31), die eine Ausgangsseite aufweist, zur durch die Steuerung (ECU) gesteuerten Erzeugung von Bremsdruck in dem zweiten Bremskreis (II.), und eine zweiten Ventilanordnung (71, 73) mit einer Eingangsseite, die mit der Ausgangseite des Hauptzylinders (12) in Fluidverbindung steht, und einer Ausgangseite, die mit der Ausgangseite der zweiten Pumpe (31) in Fluidverbindung steht, umfasst, wobei eine Fluidverbindung zwischen der Eingangsseite und der Ausgangsseite der zweiten Ventilanordnung (71, 73) gesteuert hergestellt und gesperrt werden kann, mit folgendem Schritt:

- Steuern der ersten Ventilanordnung (71, 73) und der zweiten Ventilanordnung (71, 73) während eines automatischen Bremsvorgangs, um die Fluidverbindung zwischen der Eingangsseite und der Ausgangsseite der ersten Ventilanordnung (71, 73) und die Fluidverbindung zwischen der Eingangsseite und der Ausgangsseite der zweiten Ventilanordnung (71, 73) derart herzustellen und zu sperren, dass der vorbestimmte Druck an der Ausgangsseite der ersten Ventilanordnung (71, 73) und an der Ausgangsseite der zweiten Ventilanordnung (71, 73) eingestellt wird.

**Claims**

**1.** A hydraulic braking system for a land vehicle, comprising:

- a control (ECU) being adapted for providing control signals (a, ..., g) for controlling automatic brake operations of the braking system,
- a main cylinder (12) comprising an output side for generating brake pressure under control of a driver, and
- a first brake circuit (I.) comprising

-- a first controllable pump (31) comprising an output side for
-- generating brake pressure in the first brake circuit (I.) under the control of the control (ECU), and
-- a first valve arrangement (71, 73) with an input side being in fluid connection with the output side of the main cylinder (12) and with an output side being in fluid connection with the first pump (31), the first valve arrangement (71, 73) comprising an open operating condition, in which the input side and the output side of the first valve arrangement (71, 73) are in fluid connection, and a closed operating condition, in which the fluid connection between the input side and the output side of the first valve arrangement (71, 73) is closed,

in which
- the control (ECU) is adapted to provide during an automatic brake operation control signals for the first valve arrangement (71, 73), for driving the first valve arrangement (71, 73) into its open and closed operating conditions such that at the output side of the first valve arrangement (71, 73) a predetermined pressure is set, **characterized in that**
- the predetermined pressure is set or varied by means of a pulse/pause proportion of a pulse-width modulation according to predetermined signal characteristics, wherein the signal characteristics may be continuous or may comprise stepwise changes and wherein the individual signal characteristics may be, for example, linear, sinusoidal, rectangular, triangular or serrated, and wherein
- the control (ECU) is adapted to provide during the automatic brake operation in predetermined time intervals control signals for the first valve arrangement (71, 73) for driving the first valve arrangement (71, 73) in the predetermined time intervals for a predetermined time duration into its closed operating condition, if a pressure difference applied to the first valve arrangement (71, 73) undershoots a first predetermined limit.

2. Brake system according to claim 1, in which
the control (ECU) is adapted to provide in response to the automatic brake operation control signals for the first valve arrangement (71, 73) for driving the first valve arrangement (71, 73) for a further predetermined time duration into its closed operating condition.

3. Brake system according to claim 1, in which
the control (ECU) is adapted to provide during the automatic brake operation a series of control signals for the first valve arrangement (71, 73) for driving the first valve arrangement (71, 73) alternatingly into its open and closed operating conditions.

4. Brake system according to claim 3, in which
the control (ECU) provides the control signal series in the form of high frequent control signals.

5. Brake system according to claims 3 or 4, in which
the control (ECU) is adapted to provide control signals comprising the control signals according to claim 1 and the series of alternating control signals according to claims 3 or 4 superimposing each other.

6. Brake system according to one of the preceding claims, in which
the first valve apparatus (71, 73) assumes at a predetermined upper pressure difference between its output side and its input side its open operating condition.

7. Brake system according to claim 6, in which
the control (ECU) is adapted to provide control signals for the first valve arrangement (71, 73) for driving the first valve arrangement (71, 73) at a predetermined upper pressure difference into its open operating condition.

8. Brake system according to claim 6 or 7, in which
the first valve arrangement (71, 73) assumes at the predetermined upper pressure difference its open operating condition automatically.

9. Brake system according to one of the preceding claims, in which
the control (ECU) is adapted to provide in response to an actuation of the brake system by a driver indicating an actual brake request of the driver control signals for the first valve arrangement (71, 73) for driving the first valve arrangement (71, 73) into its open operating condition and providing control signals for the brake system for ceasing the automatic brake operation.

10. Brake system according to one of the preceding claims, in which
the control (ECU) is adapted to provide in response to an actuation of the brake system by a driver indicating no actual brake request of the driver control signals for the first valve arrangement (71, 73) for driving the first valve arrangement (71, 73) into its open and closed operating conditions such that a pressure variation at the output side of the first valve arrangement (71, 73) due to brake pressures generated by the actuation of the brake system by the driver is avoided.

11. Brake system according to one of the preceding claims, in which
the control (ECU) is adapted to provide during the automatic brake operation control signals for the first pump (31) for operating the first pump (13) in correlation with a current pressure at the output side of the first valve arrangement (71, 73).

12. Brake system according to one of the preceding claims,

- with at least a pressure sensor being able to provide pressure signals indicating a current pressure at the output side of the first valve arrangement (71, 73), and
- in which the control (ECU) is adapted to provide during the automatic brake operation control signals for the first valve arrangement (71, 73) for driving the first valve arrangement (71, 73) in correlation with the pressure signals into its open and closed operating conditions.

**13.** Brake system according to claim 12, in which
the at least one pressure sensor is adapted to detect pressure at the output side of the first pump (31).

**14.** Brake system according to claim 12 or 13, in which
the at least one pressure sensor is adapted to detect pressure at an input side or in a wheel brake (50, 60) of the brake system.

**15.** Brake system according to one of the preceding claims, with

- a second brake circuit (II.) with

-- a second controllable pump (31) comprising an output side for generating brake pressure in the second brake circuit (II.) under the control of the control (ECU), and
-- a second valve arrangement (71, 73) with an input side being in fluid connection with the output side of the main cylinder (12), and an output side being in fluid connection with the output side of the second pump (31), wherein the second valve arrangement (71, 73) comprises an open operating condition in which the input side and the output side of the second valve arrangement (71, 73) are in fluid connection, and comprises a closed operating condition, in which the fluid connection between the input side and the output side of the second valve arrangement (71, 73) are closed, in which

- the control (ECU) is adapted to provide during the automatic brake operation control signals for the first valve arrangement (71, 73) and for the second valve arrangement (71, 73), for driving the first valve arrangement (71, 73) and the second valve arrangement (71, 73) into their respective open and closed operating conditions such that the predetermined pressure at the output side of the first valve arrangement (71, 73) and at the output side of the second valve arrangement (71, 73) is set.

**16.** Method of controlling a hydraulic brake system for a land vehicle comprising a main cylinder (12) comprising an output side for generating a brake pressure under the control of a driver, a first brake circuit (I.) with a first controllable pump (31) comprising an output side for generating brake pressure in the first brake circuit (I.) under the control of the control (ECU), and a first valve arrangement (71, 73) with an input side being in fluid connection with the output side of the main cylinder (12), and an output side being in fluid connection with the output side of the first pump (31), wherein the fluid connection between the input side and the output side of the first valve arrangement (71, 73) may be opened or closed under control, comprising the following steps:

- controlling the first valve arrangement (71, 73) during an automatic brake operation for opening and closing the fluid connection between the input side and the output side of the first valve arrangement (71, 73) such that a predetermined pressure is set at the output side of the first valve arrangement (71, 73), **characterized by** the steps of
- setting or varying the predetermined pressure by a pulse/pause proportion of a pulse-width modulation according to predetermined signal characteristics, wherein the signal characteristics may be continuous or may comprise discontinuous variations, and wherein the individual signal characteristics may be linear, sinusoidal, rectangular, triangular or serrated and of
- closing the fluid connection between the input side and the output side of the first valve arrangement (71, 73) in predetermined time intervals for a predetermined time duration during the automatic brake operation if a pressure difference being applied at the first valve arrangement (71, 73) undershoots a predetermined threshold.

**17.** Method according to claim 16, in which
in response to the automatic brake operation the fluid connection between the input side and the output side of the first valve arrangement (71, 73) is closed for a further predetermined time duration.

**18.** Method according to claim 16 or 17, in which
during the automatic brake operation the fluid connection between the input side and the output side of the first valve arrangement (71, 73) is opened and closed alternatingly.

**19.** Method according to claim 20, in which
the fluid connection between the input side and the output side of the first valve arrangement (71, 73) is opened and closed alternatingly with high frequency.

**20.** Method according to one of the claims 16 to 19, in which
the fluid connection between the input side and the output side of the first valve arrangement (71, 73) is opened at a predetermined upper brake difference between the output side and the input side of the first valve apparatus (71, 73).

**21.** Method according to one of the claims 16 to 20, in which
in response to an actuation of the brake system by a driver indicating an actual brake request of the driver, the fluid connection between the input side and the output side of the first valve arrangement (71, 73) is opened and the automatic brake operation is ceased.

**22.** Method according to one of the claims 16 to 21, in which
in response to an actuation of the brake system by the driver not indicating an actual brake request of the driver, the fluid connection between the input side and the output side of the first valve arrangement (71, 73) is opened and closed such that a pressure variation at the output side of the first valve arrangement (71, 73) by brake pressures generated by the actuation of the brake system by the driver is avoided.

**23.** Method according to one of the claims 16 to 22, in which

- at least an actual pressure is determined for the output side of the first valve arrangement (71, 73), and
- the fluid connection between the input side and the output side of the first valve arrangement (71, 73) is opened and closed in correlation with at least a current pressure.

**24.** Method according to claim 23, in which
the at least one current pressure at the output side of the first pump (31) is detected.

**25.** Method according to claim 24, in which
the at least one current pressure at an input side or in a wheel brake (50, 60) of the brake system is detected.

**26.** Method according to one of the claims 16 to 25, wherein the brake system comprises a second brake circuit (II.) with a second controllable pump (31) comprising an output side, for generating brake pressure in the second brake circuit (II.) under the control of the control (ECU), and a second valve arrangement (71, 73) with an input side being in fluid connection with the output side of the main cylinder (12), and an output side being in fluid connection with the output side of the second pump (31), wherein a fluid connection between the input side and the output side of the second valve arrangement (71, 73) is opened and closed under control, comprising the following steps:

- controlling the first valve arrangement (71, 73) and the second valve arrangement (71, 73) during an automatic brake operation for opening and closing the fluid connection between the input side and the output side of the first valve arrangement (71, 73) and the fluid connection between the input side and the output side of the second valve arrangement (71, 73) such that the predetermined pressure at the output side of the first valve arrangement (71, 73) and at the output side of the second valve arrangement (71, 73) is set.


**Revendications**

**1.** Système de freinage hydraulique pour véhicule terrestre, comprenant

- une commande (ECU) conçue pour fournir des signaux de commande (a, ..., g) servant à commander des opérations de freinage automatiques du système de freinage,
- un maître-cylindre (12) présentant un côté sortie et servant à produire une pression de freinage sous le contrôle d'un conducteur, et
- un premier circuit de freinage (I.) comprenant

-- une première pompe réglable (31) présentant un côté sortie et servant à produire d'une manière commandée par la commande (ECU) une pression de freinage dans le premier circuit de freinage (I.), et
-- un premier ensemble de soupapes (71, 73) avec un côté entrée en liaison fluidique avec le côté sortie du maître-cylindre (12) et un côté sortie en liaison fluidique avec le côté sortie de la première pompe (31), le premier ensemble de soupapes (71, 73) présentant un état de fonctionnement ouvert, dans lequel le côté entrée et le côté sortie du premier ensemble de soupapes (71, 73) sont en liaison fluidique, et un état de fonctionnement fermé, dans lequel est bloquée la liaison fluidique entre le côté entrée et le côté sortie du premier ensemble de soupapes (71, 73),

dans le cadre duquel
- la commande (ECU) est conçue de manière à fournir des signaux de commande pour le premier ensemble de soupapes (71, 73) pendant une opération de freinage automatique afin d'amener le premier ensemble de soupapes (71, 73) dans ses états de fonctionnement ouverts et fermés de sorte à régler une pression prédéterminée au niveau du côté sortie du premier ensemble de soupapes (71, 73), **caractérisé en ce que**
- la pression prédéterminée est réglée ou modifiée au moyen d'un rapport impulsion/pause d'une modulation de largeur d'impulsions selon des courbes de signaux prédéterminés, les courbes de signaux pouvant être continues ou présenter des modifications en échelon, et les différentes courbes de signaux pouvant être par exemple linéaires, sinusoïdales, rectangulaires, triangulaires ou en dents de scie, et
- la commande (ECU) étant conçue de manière à fournir, à des intervalles de temps prédéterminés, des signaux de commande pour le premier ensemble de soupapes (71, 73) pendant une opération de freinage automatique afin d'amener, à des intervalles de temps prédéterminés et pour une durée prédéterminée, le premier ensemble de soupapes (71, 73) dans son état de fonctionnement fermé lorsqu'une différence de pression exercée au niveau du premier ensemble de soupapes (71, 73) passe en dessous d'une valeur seuil prédéterminée.

**2.** Système de freinage selon la revendication 1, dans le cadre duquel
la commande (ECU) est conçue de manière à fournir des signaux de commande pour le premier ensemble de soupapes (71, 73) en réponse à l'opération de freinage automatique afin d'amener pour une durée prédéterminée supplémentaire le premier ensemble de soupapes (71, 73) dans son état de fonctionnement fermé.

**3.** Système de freinage selon la revendication 1, dans le cadre duquel
la commande (ECU) est conçue de manière à fournir une suite de signaux de commande pour le premier ensemble de soupapes (71, 73) pendant l'opération de freinage automatique afin d'amener le premier ensemble de soupapes (71, 73), à tour de rôle, dans ses états de fonctionnement ouvert et fermé.

**4.** Système de freinage selon la revendication 3, dans le cadre duquel
la commande (ECU) fournit la suite de signaux de commande sous forme de signaux de commande à haute fréquence.

**5.** Système de freinage selon la revendication 3 ou 4, dans le cadre duquel
la commande (ECU) est conçue de manière à fournir des signaux de commande qui comprennent, se superposant les uns aux autres, des signaux de commande selon la revendication 1 et la suite de signaux de commande alternants selon la revendication 3 ou 4.

**6.** Système de freinage selon l'une des revendications précédentes, dans le cadre duquel
le premier ensemble de soupapes (71, 73) passe à son état de fonctionnement ouvert, en présence d'une différence de pression supérieure prédéterminée entre son côté sortie et son côté entrée.

**7.** Système de freinage selon la revendication 6, dans le cadre duquel
la commande (ECU) est conçue de manière à fournir des signaux de commande pour le premier ensemble de soupapes (71, 73) afin d'amener, en présence de la différence de pression supérieure prédéterminée, le premier ensemble de soupapes (71, 73) dans son état de fonctionnement ouvert.

**8.** Système de freinage selon la revendication 6 ou 7, dans le cadre duquel
le premier ensemble de soupapes (71, 73) passe automatiquement à son état de fonctionnement ouvert, en présence de la différence de pression supérieure prédéterminée.

**9.** Système de freinage selon l'une des revendications précédentes, dans le cadre duquel
la commande (ECU) est conçue de manière à fournir, en réponse à l'actionnement du système de freinage par un conducteur, lequel actionnement indique le souhait réel du conducteur de freiner, des signaux de commande afin d'amener le premier ensemble de soupapes (71, 73) dans son état de fonctionnement ouvert, et de manière à fournir des signaux de commande pour le système de freinage afin d'achever l'opération de freinage automatique.

**10.** Système de freinage selon l'une des revendications précédentes, dans le cadre duquel
la commande (ECU) est conçue de manière à fournir, en réponse à l'actionnement du système de freinage par un conducteur, lequel actionnement n'indique pas le souhait réel du conducteur de freiner, des signaux de commande

afin d'amener le premier ensemble de soupapes (71, 73) dans ses états de fonctionnement ouvert et fermé de sorte à empêcher, en raison des pressions de freinage produites suite à l'actionnement du système de freinage par le conducteur, une modification de la pression au niveau du côté sortie du premier ensemble de soupapes (71, 73).

**11.** Système de freinage selon l'une des revendications précédentes, dans le cadre duquel
la commande (ECU) est conçue de manière à fournir des signaux de commande pour la première pompe (31) pendant l'opération automatique de freinage afin de faire fonctionner la première pompe (31) en fonction d'une pression actuelle exercée au niveau du côté sortie du premier ensemble de soupapes (71, 73).

**12.** Système de freinage selon l'une des revendications précédentes,

- comprenant au moins un capteur de pression capable de fournir, pendant l'opération de freinage automatique, des signaux de pression indiquant la pression actuelle exercée au niveau du côté sortie du premier ensemble de soupapes (71, 73), et
- dans le cadre duquel la commande (ECU) est conçue de manière à fournir des signaux de commande pour le premier ensemble de soupapes (71, 73) afin d'amener le premier ensemble de soupapes (71, 73) dans ses états de fonctionnement ouvert et fermé en fonction des signaux de pression.

**13.** Système de freinage selon la revendication 12, dans le cadre duquel

- il est aménagé au moins un capteur de pression servant à détecter la pression exercée au niveau du côté sortie de la première pompe (31).

**14.** Système de freinage selon la revendication 12 ou 13, dans le cadre duquel

- il est aménagé au moins un capteur de pression servant à détecter la pression exercée au niveau du côté entrée ou dans un frein de roue (50, 60) du système de freinage.

**15.** Système de freinage selon l'une des revendications précédentes, comprenant

- un second circuit de freinage (II.) comprenant

-- une seconde pompe réglable (31) présentant un côté sortie et servant à produire d'une manière commandée par la commande (ECU) une pression de freinage dans le second circuit de freinage (II.), et
-- un second ensemble de soupapes (71, 73) avec un côté entrée en liaison fluidique avec le côté sortie du maître-cylindre (12) et un côté sortie en liaison fluidique avec le côté sortie de la seconde pompe (31), le second ensemble de soupapes (71, 73) présentant un état de fonctionnement ouvert, dans lequel le côté entrée et le côté sortie du premier ensemble de soupapes (71, 73) sont en liaison fluidique, et un état de fonctionnement fermé, dans lequel est bloquée la liaison fluidique entre le côté entrée et le côté sortie du second ensemble de soupapes (71, 73),

dans le cadre duquel
- la commande (ECU) est conçue de manière à fournir des signaux de commande pour le premier ensemble de soupapes (71, 73) et pour le second ensemble de soupapes (71, 73) pendant l'opération de freinage automatique afin d'amener respectivement le premier ensemble de soupapes (71, 73) et le second ensemble de soupapes (71, 73) dans leurs états de fonctionnement ouverts et fermés de sorte à régler la pression prédéterminée au niveau du côté sortie du premier ensemble de soupapes (71, 73) et au niveau du côté sortie du second ensemble de soupapes (71, 73).

**16.** Procédé pour piloter une système de freinage hydraulique pour véhicule terrestre,
comprenant un maître-cylindre (12) présentant un côté sortie et servant à produire une pression de freinage sous le contrôle d'un conducteur, et un premier circuit de freinage (I.) avec une première pompe réglable (31) présentant un côté sortie et servant à produire de manière commandée une pression de freinage dans le premier circuit de freinage (I.), et un premier ensemble de soupapes (71, 73) avec un côté entrée en liaison fluidique avec le côté sortie du maître-cylindre (12) et un côté sortie en liaison fluidique avec le côté sortie de la première pompe (31), la liaison fluidique entre le côté entrée et le côté sortie du premier ensemble de soupapes (71, 73) pouvant être établie et bloquée de manière commandée, comprenant les étapes suivantes :

- commande du premier ensemble de soupapes (71, 73) pendant une opération de freinage automatique afin d'établir et de bloquer la liaison fluidique entre le côté entrée et le côté sortie du premier ensemble de soupapes (71, 73) de sorte à régler une pression prédéterminée au niveau du côté sortie du premier ensemble de soupapes (71, 73), **caractérisé par** les étapes consistant

- en le réglage ou la modification de la pression prédéterminée au moyen d'un rapport impulsion/pause d'une modulation de largeur d'impulsions selon des courbes de signaux prédéterminés, les courbes de signaux pouvant être continues ou présenter des modifications en échelon, et les différentes courbes de signaux pouvant être par exemple linéaires, sinusoïdales, rectangulaires, triangulaires ou en dents de scie, et

- en le blocage de la liaison fluidique entre le côté entrée et le côté sortie du premier ensemble de soupapes (71, 73) à des intervalles de temps prédéterminés et pour une durée prédéterminée pendant l'opération de freinage automatique, lorsqu'une différence de pression exercée au niveau du premier ensemble de soupapes (71, 73) passe en dessous d'une valeur seuil prédéterminée.

17. Procédé selon la revendication 16, dans le cadre duquel
en réponse à l'opération de freinage automatique, une liaison fluidique entre le côté entrée et le côté sortie du premier ensemble de soupapes (71, 73) est bloquée pour une durée prédéterminée supplémentaire.

18. Procédé selon la revendication 16 ou 17, dans le cadre duquel
pendant l'opération de freinage automatique, la liaison fluidique entre le côté entrée et le côté sortie du premier ensemble de soupapes (71, 73) est établie et bloquée en alternance.

19. Procédé selon la revendication 20, dans le cadre duquel
la liaison fluidique entre le côté entrée et le côté sortie du premier ensemble de soupapes (71, 73) est établie et bloquée en alternance selon une fréquence élevée.

20. Procédé selon l'une des revendications 16 à 19, dans le cadre duquel
la liaison fluidique entre le côté entrée et le côté sortie du premier ensemble de soupapes (71, 73) est établie, en présence d'une différence de pression supérieure prédéterminée entre le côté sortie et le côté entrée du premier ensemble de soupapes (71, 73).

21. Procédé selon l'une des revendications 16 à 20, dans le cadre duquel
en réponse à un actionnement du système de freinage par un conducteur, lequel actionnement indique le souhait réel du conducteur de freiner, la liaison fluidique entre le côté entrée et le côté sortie du premier ensemble de soupapes (71, 73) est établie, et l'opération de freinage automatique, achevée.

22. Procédé selon l'une des revendications 16 à 21, dans le cadre duquel
en réponse à l'actionnement du système de freinage par un conducteur, lequel actionnement n'indique pas le souhait réel du conducteur de freiner, la liaison fluidique entre le côté entrée et le côté sortie du premier ensemble de soupapes (71, 73) est établie et bloquée de sorte à empêcher une modification de la pression au niveau du côté sortie du premier ensemble de soupapes (71, 73) en raison des pressions de freinage produites suite à l'actionnement du système de freinage par le conducteur.

23. Procédé selon l'une des revendications 16 à 22, dans le cadre duquel

- il est déterminé au moins une pression actuelle pour le côté sortie du premier ensemble de soupapes (71, 73), et
- la liaison fluidique entre le côté entrée et le côté sortie du premier ensemble de soupapes (71, 73) est établie et bloquée en fonction d'au moins une des pressions actuelles.

24. Procédé selon la revendication 23, dans le cadre duquel

- il est déterminé au moins une pression actuelle au niveau du côté sortie de la première pompe (31).

25. Procédé selon la revendication 24, dans le cadre duquel

- il est déterminé au moins une pression actuelle au niveau d'un côté entrée ou dans un frein de roue (50, 60) du système de frein.

26. Procédé selon l'une des revendications 16 à 25, le système de frein comprenant un second circuit de freinage (II.)

avec une seconde pompe réglable (31) présentant un côté sortie et servant à produire d'une manière commandée par la commande (ECU) une pression de freinage dans le second circuit de freinage (II.), et un second ensemble de soupapes (71, 73) avec un côté entrée en liaison fluidique avec le côté sortie du maître-cylindre (12) et un côté sortie en liaison fluidique avec le côté sortie de la seconde pompe (31), une liaison fluidique entre le côté entrée et le côté sortie du second ensemble de soupapes (71, 73) pouvant être établie et bloquée de manière commandée, comprenant les étapes suivantes :

- commande du premier ensemble de soupapes (71, 73) et du second ensemble de soupapes (71, 73) pendant une opération de freinage automatique afin d'établir et de bloquer la liaison fluidique entre le côté entrée et le côté sortie du premier ensemble de soupapes (71, 73) et la liaison fluidique entre le côté entrée et le côté sortie du second ensemble de soupapes (71, 73) de sorte à régler la pression prédéterminée au niveau du côté sortie du premier ensemble de soupapes (71, 73) et au niveau du côté sortie du second ensemble de soupapes (71, 73).

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9427848 A
- EP 0928730 A1
- DE 3624344 A1
- WO 9719282 A
- WO 9610507 A
- DE 4002865 A1
- WO 9322169 A
- DE 19525800 A1
- US 3832010 A
- JP 2004284476 A
- DE 4439890 A1